# EUROPEAN PATENT SPECIFICATION

(11) **EP 0 865 726 B1**
(45) Date of publication and mention of the grant of the patent: **16.08.2001**
(21) Application number: 98200817.9
(22) Date of filing: 16.03.1998
(51) Int. Cl.: A01J 7/04, A01J 5/017

(54) **An implement for milking animals**
Vorrichtung zum Melken von Tieren
Dispositif de traite d'animaux

(30) Priority: 18.03.1997 NL 1005561
(43) Date of publication of application: 23.09.1998
(73) Proprietor: MAASLAND N.V., 3155 PD Maasland (NL)
(72) Inventor: van der Lely, Cornelis, 6300 Zug (CH)
(74) Representative: Corten, Maurice Jean F.M.

(56) References cited:
- EP-A- 0 497 062
- EP-A- 0 630 558
- FR-A- 2 159 370
- FR-A- 2 265 268
- GB-A- 1 135 874

## Description

The invention relates to an implement for milking animals, such as cows, comprising a milk box including a milking robot for automatically connecting teat cups to the teats of an animal to be milked, and provided with means, such as massage means, for cleaning and/or massaging of at least parts of an animal.

Such implements are known and have to promote the cleanliness of the teats.

The above-mentioned implements have for their object to obtain with the animals a maximum milk or meat yield and a low disease percentage. Therefore, the invention aims at improving the conditions of the animal in the implement.

In accordance with the invention this is achieved in that the means comprise switch means with the aid of which an animal can be automatically treated alternately with a warm and a cold liquid or air flow. Treating the animal alternately with a warm and a cold liquid or air flow has a salutary effect on the animal.

According to an inventive feature, the massage means comprise adjusting means with the aid of which the force at which and/or the amount of liquid and/or air with which the animal is treated can be adjusted. For example, at the beginning there may be massaged using little force or a small amount of liquid, whereafter these amounts are increased gradually. It is further possible to make the force and the amount of liquid and/or air applied animal-dependent. According to a further inventive feature, the massage means comprise at least one spraying member. According to again another inventive feature, the spraying member comprises spray-adjusting means with the aid of which the coarse/fine distribution of a spray pattern of a relevant spraying member can be adjusted. The spray-adjusting means enable to modify and/or adjust in an animal-dependent manner the coarse/fine distribution of the spray pattern during massaging. Moreover, using the implement according to the invention, it will be possible to improve the blood circulation of the animal.

In order to optimize hygienic conditions, according to an inventive feature the massage means comprise a disinfectant liquid tank, as well as mixing means with the aid of which the disinfectant liquid can be mixed in the tank with the warm and/or cold liquid.

According to an inventive feature, on the side wall of the milk box and/or the doors of the milk box there are provided spraying members. According to again another inventive feature, near the upper side of the milk box there is provided a row of spraying members. For the purpose of adjusting the spraying members, according to an inventive feature the spraying members are rotatable. In accordance with another inventive feature, the spraying members can be automatically rotated during massaging. According to again a further inventive feature, it is also possible to move the spraying members in a reciprocating manner in the longitudinal direction of the milk boxes. According to an inventive feature, the spraying members are moved automatically in a reciprocating manner in the longitudinal direction of the milk box by means of a motor or a cylinder. According to a further inventive feature, viewed in the longitudinal direction of the milk box, the spraying members are located in the centre plane of the milk box. In accordance with an inventive feature, for the purpose of massaging the hind legs of the animal, the spraying members are disposed in the milk box near the place where the hind legs of the animals are located.

According to the invention the massage means may furthermore comprise a massage device provided with a disc made of flexible material, which disc may be motor-driven. In accordance with a preferred embodiment of the invention, the flexible disc can be rotated to and fro about an axis, its speed of rotation being adjustable. The advantage thereof is that it will be possible to massage in an animal-dependent manner at a variable speed and that the speed can be adjusted during massaging. According to again another inventive feature, one or more flexible discs are arranged near the animal's udder. According to a further inventive feature, the flexible disc or discs are pivotably disposed on the side wall of the milk boxes or on one of the doors of the milk box. According to a further inventive feature, the discs can pivot automatically, so as not to form an obstacle for the animal when the latter enters the milk box.

For a better understanding of the invention, reference will now be made to the accompanying drawings, in which:
Figure 1 shows a side view of a milk box with massage means for the animal disposed therein;
Figure 2 shows a plan view of the milk box according to the arrow II in Figure 1;
Figure 3 shows a rear view of the milk box of Figures 1 and 2 according to the arrow III in Figure 2.

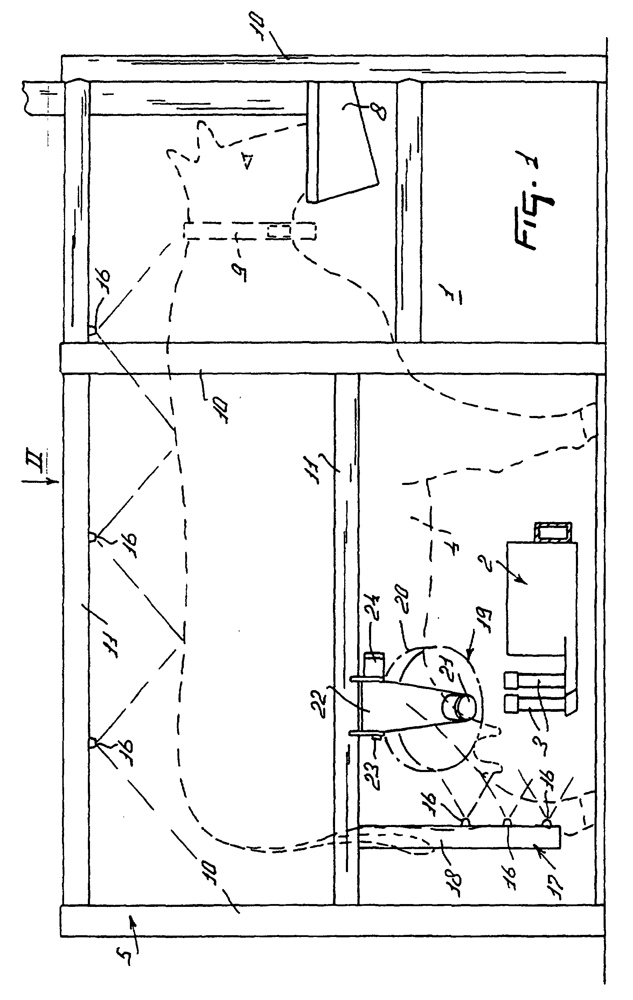

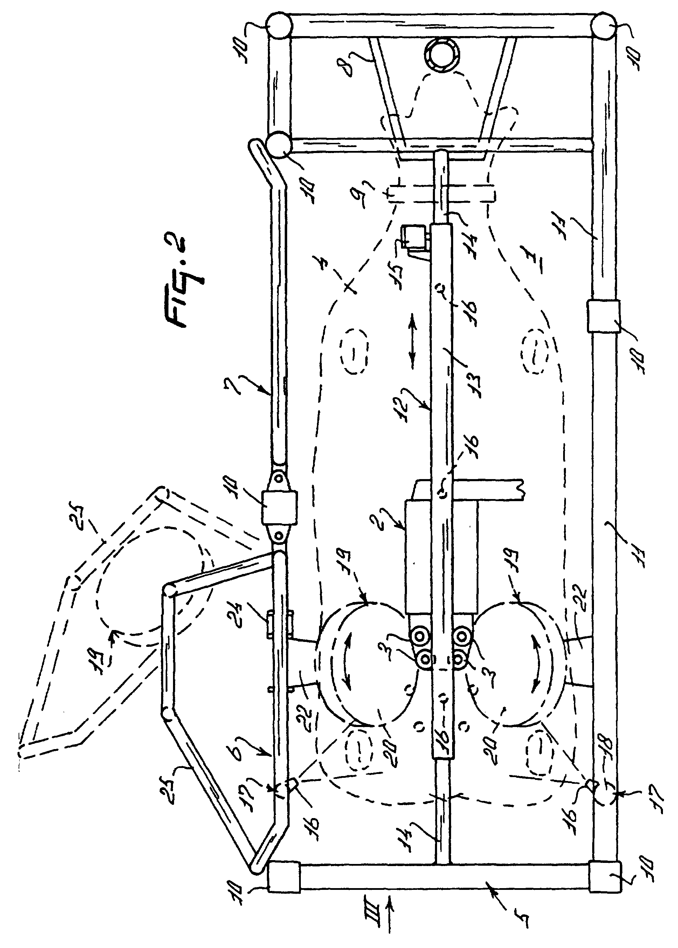

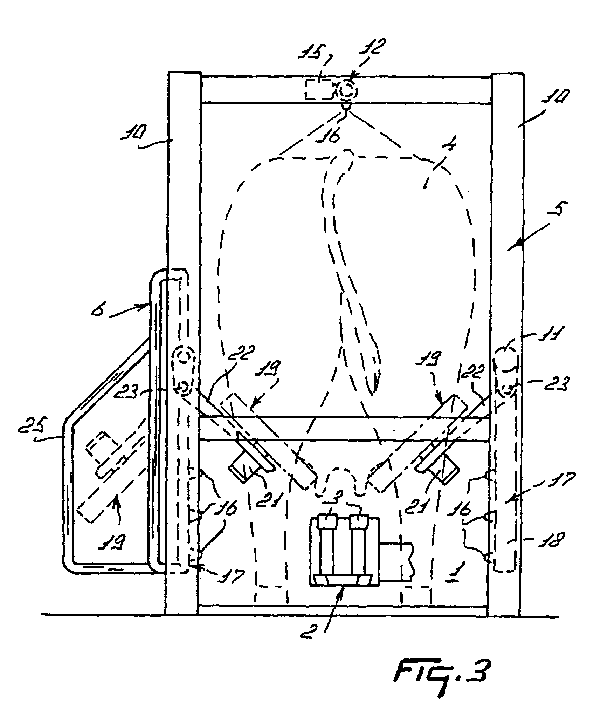

Figure 1 shows a side view of a milk box 1 in which a milking robot 2 is represented schematically for automatically connecting teat cups 3 to the teats of an animal 4 to be milked, respectively disconnecting same therefrom. The milk box 1 comprises a frame 5 provided with an entrance door 6 and an exit door 7. Near the front side of the milk box 1 there is further provided a feed trough 8 in which concentrate can be fed by means of a (non-shown) concentrate metering system. The milk box 1 is further provided with a (non-shown) animal identification system which is capable of identifying an animal in the milk box 1 on the basis of a collar 9 disposed around an animal's neck. The frame 5 of the milk box 1 comprises vertical stands 10 with crossbeams 11 disposed therebetween. In the centre plane, viewed in the longitudinal direction of the milk box 1, there is disposed a first row of spraying members 12 near the upper side of a milk box 1. The first row of spraying members 12 is disposed on a tube 13 which is shiftable across a rod 14 that is attached to a rear and a front crossbeam. The tube 13 can be moved in a reciprocating manner across the rod 14 by means of a stepper motor 15 which is disposed near the front side of the rod 14 (Figure 2). As represented in Figure 1, the first row of spraying members 12 comprises three spaced-apart sprayers 16. During massaging the sprayers 16 are capable of being rotated automatically, so that the entire back of the animal 4 can be treated with warm and/or cold water. By means of (non-shown) switch means it is possible to treat automatically the animal 4 alternately with a warm and a cold liquid or air flow. It is further possible to mix a disinfectant liquid with the warm or cold liquid with the aid of (non-shown) mixing means. The spraying members 12 are further provided with (non-shown) spray-adjusting means with the aid of which the coarse/fine distribution of a spray pattern of a sprayer 16 can be set.

Besides a first row of spraying members 12 the massage means further comprise two second rows of spraying members 17 which, as shown in Figures 2 and 3, are disposed on each of the lateral sides of the milk box 1 near the legs of the animal 4 in the milk box 1. One of the two second rows of spraying members 17 comprises a vertical beam 18 which is disposed at one side of the milk box 1 on a crossbeam 11, the other second row of spraying members being disposed at the other side of the milk box 1 on the entrance door 6. Each of the two second rows of spraying members 17 also comprises three sprayers 16. The function of the two second rows of spraying members 17 equals that of the first row of spraying members 12.

The means according to the invention further comprise a massage device 19 with the aid of which the udder and/or the side of the animal can be massaged (Figure 3). The massage device 19 is provided with two discs 20 made of flexible material. The discs 20 are each connected via a stepper motor 21 with a support 22. At one longitudinal side of the milk box 1 the support 22 is pivotably connected with a crossbeam 11 of the frame 5 via a horizontal axis 23, while at the other longitudinal side of the milk box 1 the support 22 is pivotably connected with the entrance door 6 of the milk box 1, also via a horizontal axis 23. The two supports 22 can pivot by means of a stepper motor 24 about the horizontal axis 23. As shown in Figure 3, after the animal 4 has entered the milk box 1, the discs 20 can pivot by means of the stepper motor 24 from outside the milk box 1 until the animal's udder. By means of the stepper motor 21 the discs 20 can be rotated subsequently to and fro in order to massage the udder and the sides of the animal. As indicated in Figures 2 and 3, the entrance door 6 comprises a protective bracket 25 shielding the disc 20 when the latter has pivoted outside the milk box 1.

## Claims

1. An implement for milking animals, such as cows, comprising a milk box (1) including a milking robot (2) for automatically connecting teat cups (3) to the teats of an animal to be milked, and provided with means (12; 17; 19), such as massage means, for cleaning and/or massaging of at least parts of an animal, characterized in that the means (12; 17; 19) comprise switch means with the aid of which an animal is automatically treated alternately with a warm and a cold liquid or air flow.

2. An implement as claimed in any one of the preceding claims, characterized in that the means (12; 17; 19) comprise adjusting means with the aid of which the force at which and/or the amount of liquid and/or air with which is massaged can be controlled.

3. An implement as claimed in any one of the preceding claims, characterized in that the massage means (12; 17; 19) comprise at least one spraying member (12; 17).

4. An implement as claimed in claim 3, characterized in that the spraying member (12; 17) comprises spray-adjusting means with the aid of which the coarse/fine distribution of the spray pattern of a relevant spraying member (12; 17) can be adjusted.

5. An implement as claimed in any one of the preceding claims, characterized in that the massage means (12; 17; 19) comprise a disinfectant liquid tank, as well as mixing means with the aid of which the disinfectant liquid can be mixed in the tank with the warm and/or cold liquid.

6. An implement as claimed in any one of the preceding claims, characterized in that on the side wall of the milk box (1) and/or the doors (6; 7) of the milk box (1) there are provided spraying members (17).

7. An implement as claimed in any one of claims 3 to 5, characterized in that near the upper side of the milk box (1) there is provided a row of spraying members (12).

8. An implement as claimed in any one of claims 3 to 7, characterized in that the spraying members are rotatable.

9. An implement as claimed in claim 8, characterized in that the spraying members are rotated automatically during massaging.

10. An implement as claimed in any one of claims 3 to 9, characterized in that the spraying members are disposed so as to be movable in a reciprocating manner in the longitudinal direction of the milk box (1).

11. An implement as claimed in claim 9 or 10, characterized in that the spraying members are disposed so as to be rotatable and to be movable in a reciprocating manner in the longitudinal direction of the milk box by means of a motor (14).

12. An implement as claimed in any one of claims 7 to 11, characterized in that, viewed in the longitudinal direction of the milk box (1), the spraying members (12) are located in the centre plane of the milk box (1).

13. An implement as claimed in any one of claims 3 to 12, characterized in that spraying members (17) are disposed in the milk box (1) near the place where the hind legs of an animal are located.

14. An implement as claimed in any one of the preceding claims, characterized in that the massage means comprise a massage device (19) provided with a disc (20) made of flexible material.

15. An implement as claimed in claim 14, characterized in that the flexible disc (20) is motor-driven.

16. An implement as claimed in claim 15, characterized in that the flexible disc (20) is rotatable to and fro about an axis.

17. An implement as claimed in claim 15 or 16, characterized in that the speed at which the flexible disc (20) is rotated is adjustable.

18. An implement as claimed in any one of claims 14 to 17, characterized in that one or more flexible discs (20) are arranged near the animal's udder in the milk box (1).

19. An implement as claimed in claim 18, characterized in that the flexible disc or discs (20) are pivotably disposed on a side wall of the milk box (1).

20. An implement as claimed in claim 19, characterized in that the flexible disc or discs (20) are automatically pivotable.

## Patentansprüche

1. Vorrichtung zum Melken von Tieren, wie z. B. Kühen, mit einer Melkbox (1) und einem Melkroboter (2) zum automatischen Anschließen von Zitzenbechern (3) an die Zitzen eines zu melkenden Tieres sowie mit Vorrichtungen (12; 17; 19), wie z. B. Massagevorrichtungen, zum Reinigen und/oder Massieren zumindest von Teilen eines Tieres,
dadurch gekennzeichnet, daß die Vorrichtungen (12; 17; 19) Schaltvorrichtungen umfassen, mit deren Hilfe ein Tier automatisch abwechselnd mit einer warmen und einer kalten Flüssigkeit oder einem Luftstrom behandelt wird.

2. Vorrichtung nach einem der vorhergehenden Ansprüche,
dadurch gekennzeichnet, daß die Vorrichtungen (12; 17; 19) Stellvorrichtungen umfassen, mit deren Hilfe die Kraft und/oder die Menge an Flüssigkeit und/oder Luft, mit der massiert wird, gesteuert werden kann.

3. Vorrichtung nach einem der vorhergehenden Ansprüche,
dadurch gekennzeichnet, daß die Massagevorrichtungen (12; 17; 19) mindestens ein Sprühglied (12; 17) umfassen.

4. Vorrichtung nach Anspruch 3,
dadurch gekennzeichnet, daß das Sprühglied (12; 17) Sprüheinstellvorrichtungen umfaßt, mit deren Hilfe die grobe/feine Verteilung des Sprühmusters eines jeweiligen Sprühgliedes (12; 17) eingestellt werden kann.

5. Vorrichtung nach einem der vorhergehenden Ansprüche,
dadurch gekennzeichnet, daß die Massagevorrichtungen (12; 17; 19) einen Desinfektionsflüssigkeitsbehälter sowie eine Mischvorrichtung umfassen, mit deren Hilfe die Desinfektionsflüssigkeit in dem Behälter mit der warmen und/oder kalten Flüssigkeit gemischt werden kann.

6. Vorrichtung nach einem der vorhergehenden Ansprüche,
dadurch gekennzeichnet, daß an der Seitenwand der Melkbox (1) und/oder an den Türen (6; 7) der Melkbox (1) Sprühglieder (17) angeordnet sind.

7. Vorrichtung nach einem der Ansprüche 3 bis 5,
dadurch gekennzeichnet, daß nahe der Oberseite der Melkbox (1) eine Reihe von Sprühgliedern (12) angeordnet ist.

8. Vorrichtung nach einem der Ansprüche 3 bis 7,
dadurch gekennzeichnet, daß die Sprühglieder drehbar sind.

9. Vorrichtung nach Anspruch 8,
dadurch gekennzeichnet, daß die Sprühglieder während des Massierens automatisch gedreht werden.

10. Vorrichtung nach einem der Ansprüche 3 bis 9,
dadurch gekennzeichnet, daß die Sprühglieder derart angeordnet sind, daß sie in Längsrichtung der Melkbox (1) hin- und herbewegbar sind.

11. Vorrichtung nach Anspruch 9 oder 10,
dadurch gekennzeichnet, daß die Sprühglieder derart angeordnet sind, daß sie mittels eines Motors (14) drehbar und in Längsrichtung der Melkbox hin- und herbewegbar sind.

12. Vorrichtung nach einem der Ansprüche 7 bis 11,
dadurch gekennzeichnet, daß die Sprühglieder (12) in bezug auf die Längsrichtung der Melkbox (1) in der Mittelebene der Melkbox (1) liegen.

13. Vorrichtung nach einem der Ansprüche 3 bis 12,
dadurch gekennzeichnet, daß die Sprühglieder (17) in der Melkbox (1) nahe der Stelle angeordnet sind, an der sich die Hinterbeine eines Tieres befinden.

14. Vorrichtung nach einem der vorhergehenden Ansprüche,
dadurch gekennzeichnet, daß die Massagevorrichtungen eine Massagevorrichtung (19) umfassen, die mit einer Scheibe (20) aus flexiblem Material versehen ist.

15. Vorrichtung nach Anspruch 14,
dadurch gekennzeichnet, daß die flexible Scheibe (20) motorisch angetrieben ist.

16. Vorrichtung nach Anspruch 15,
dadurch gekennzeichnet, daß die flexible Scheibe (20) um eine Achse hin- und herbewegbar ist.

17. Vorrichtung nach Anspruch 15 oder 16,
dadurch gekennzeichnet, daß die Geschwindigkeit, mit der die flexible Scheibe (20) gedreht wird, einstellbar ist.

18. Vorrichtung nach einem der Ansprüche 14 bis 17,
dadurch gekennzeichnet, daß eine oder mehrere flexible Scheiben (20) nahe dem Euter des Tieres in der Melkbox (1) angeordnet sind.

19. Vorrichtung nach Anspruch 18,
dadurch gekennzeichnet, daß die flexible Scheibe oder Scheiben (20) schwenkbar an einer Seitenwand der Melkbox (1) angeordnet sind.

20. Vorrichtung nach Anspruch 19,
dadurch gekennzeichnet, daß die flexible Scheibe oder Scheiben (20) automatisch verschwenkt werden können.

## Revendications

1. Installation de traite d'animaux, tels que des vaches, comportant un box de traite (1) incluant un robot de traite (2) destiné à connecter automatiquement des gobelets trayeurs (3) aux trayons d'un animal à traire, et munie de moyens (12 ; 17 ; 19), tels que des moyens de massage, pour nettoyer et/ou masser au moins des parties d'un animal, caractérisée en ce que les moyens (12 ; 17 ; 19) comportent des moyens de commutation à l'aide desquels on peut traiter un animal automatiquement en alternance avec un liquide chaud et un liquide froid, ou un écoulement d'air.

2. Installation selon la revendication 1, caractérisée en ce que les moyens (12 ; 17 ; 19) comportent des moyens d'ajustement à l'aide desquels on peut commander la force et/ou la quantité de liquide et/ou d'air avec laquelle on masse.

3. Installation selon l'une quelconque des revendications précédentes, caractérisée en ce que les moyens de massage (12 ; 17 ; 19) comportent au moins un élément de pulvérisation (12 ; 17).

4. Installation selon la revendication 3, caractérisée en ce que l'élément de pulvérisation (12 ; 17) comporte des moyens d'ajustement de pulvérisation à l'aide desquels la répartition grossière/fine du motif de pulvérisation d'un élément de pulvérisation concerné (12 ; 17) peut être ajustée.

5. Installation selon l'une quelconque des revendications précédentes, caractérisée en ce que les moyens de massage (12 ; 17 ; 19) comportent un réservoir de liquide désinfectant, de même que des moyens de mélange à l'aide desquels on peut mélanger le liquide désinfectant situé dans le réservoir au liquide chaud et/ou froid.

6. Installation selon l'une quelconque des revendications précédentes, caractérisée en ce que des éléments de pulvérisation (17) sont agencés sur la paroi latérale du box de traite (1) et/ou les portes (6 ; 7) du box de traite (1).

7. Installation selon l'une quelconque des revendications 3 à 5, caractérisée en ce qu'un rang d'éléments de pulvérisation (12)est agencé à proximité du côté supérieur du box de traite (1).

8. Installation selon l'une quelconque des revendications 3 à 7, caractérisée en ce que les éléments de pulvérisation sont rotatifs.

9. Installation selon la revendication 8, caractérisée en ce que les éléments de pulvérisation sont mis en rotation de manière automatique pendant un massage.

10. Installation selon l'une quelconque des revendications 3 à 9, caractérisée en ce que les éléments de pulvérisation sont disposés de manière à être mobiles en va-et-vient dans la direction longitudinale du box de traite (1).

11. Installation selon l'une quelconque des revendications 9 ou 10, caractérisée en ce que les éléments de pulvérisation sont disposés de manière à être rotatifs et mobiles en va-et-vient dans la direction longitudinale du box de traite par l'intermédiaire d'un moteur (14).

12. Installation selon l'une quelconque des revendications 7 à 11, caractérisée en ce que, vus dans la direction longitudinale du box de traite (1), les éléments de pulvérisation (12) sont situés dans un plan central du box de traite (1).

13. Installation selon l'une quelconque des revendications 3 à 12, caractérisée en ce que les éléments de pulvérisation (17) sont disposés dans le box de traite (1) à proximité de l'endroit où sont situées les pattes arrière d'un animal.

14. Installation selon l'une quelconque des revendications précédentes, caractérisée en ce que les moyens de massage comportent un dispositif de massage (19) muni d'un disque (20) constitué d'un matériau souple.

15. Installation selon la revendication 14, caractérisée en ce que le disque souple (20) est entraîné par un moteur.

16. Installation selon la revendication 15, caractérisée en ce que le disque souple (20) peut tourner en va-et-vient autour d'un axe.

17. Installation selon la revendication 15 ou 16, caractérisée en ce que la vitesse à laquelle le disque souple (20) est mis en rotation peut être ajustée.

18. Installation selon l'une quelconque des revendications 14 à 17, caractérisée en ce qu'un disque souple (20) ou plus sont disposés à proximité du pis de l'animal présent dans le box de traite (1).

19. Installation selon la revendication 18, caractérisée en ce que le disque souple ou les disques souples (20) sont disposés de manière pivotante sur une paroi latérale du box de traite (1).

20. Installation selon la revendication 19, caractérisée en ce que le disque souple ou les disques souples (20) peuvent pivoter automatiquement.
